Europäisches Patentamt

European Patent Office

Office européen des brevets

(11) Publication number: **0 494 676 A2**

# EUROPEAN PATENT APPLICATION

(21) Application number: **92100293.7**

(22) Date of filing: **09.01.92**

(51) Int. Cl.5: **G06F 15/20**

(30) Priority: **09.01.91 JP 12745/91**

(43) Date of publication of application:
**15.07.92 Bulletin 92/29**

(84) Designated Contracting States:
**DE FR GB**

(71) Applicant: **Oki Electric Industry Co., Ltd.**
**7-12, Toranomon 1-chome Minato-ku**
**Tokyo(JP)**

(72) Inventor: **Koyama, Noritaka, c/o Oki Electric**
**Ind. Co.,Ltd.**
**7-2, Toranomon 1-chome**
**Minato-ku, Tokyo(JP)**
Inventor: **Oyake, Ikuo, c/o Oki Electric Ind.**
**Co.,Ltd.**
**7-2, Toranomon 1-chome**
**Minato-ku, Tokyo(JP)**
Inventor: **Moriya, Nobuyuki, c/o Oki Electric**
**Ind. Co.,Ltd.**
**7-2, Toranomon 1-chome**
**Minato-ku, Tokyo(JP)**

(74) Representative: **Betten & Resch**
**Reichenbachstrasse 19**
**W-8000 München 5(DE)**

(54) Raster image processing system.

(57) A raster image processing system has a processor or controller (54) for supervising a font data base (22), in addition to a processor (52) which executes raster image processing. The system also has a font data cache (56) in addition to the font data base (22) which stores font data. In the event of drawing a sequence of characters, the system divides the characters into a first group whose font data exists in the font data cache (56) and a second group whose font data does not exist in the same, accesses the font data base (22) for the font data of the second group of characters, draws the first group of characters asynchronously before receiving all the font data of the second group of characters, and draws the second group of characters on writing all the characters belonging to the first group.

FIG.2

## BACKGROUND OF THE INVENTION

### Field of the Invention

The present invention relates to a raster image processing system and, more particularly, to a raster image processing system which generates a raster image by processing data described in a page description language.

### Description of the Prior Art

It has been customary with a raster image processing system to draw a sequence of characters by assigning a particular procedure to a single processor. Specifically, when the system handles a font including a relatively small number of characters, e. g. , alphabets, a single processor loads a font data cache with all the characters included in the font when the font is selected by a user program. To draw such characters, the processor fetches data from the font data cache character by character.

In a raster image processing system capable of dealing with Japanese language, for example, a font data cache can accommodate only part of the fonts since the Japanese fonts include a great number of characters. To draw a sequence of characters, a processor incorporated in this kind of system checks the font data cache to see if font data exists in the font data cache character by character. When the font data of a given character is not found in the font data cache, the processor accesses a font data base, fetches the font data of interest from the data base, and then starts on processing for the next character.

The amount of font data bases available with a raster image processing system is expected to increase in the future. Especially, the fonts of various styles of type will be developed in various languages. A raster image processing system having a huge font data base and supervising it by an exclusive processor or a host CPU (Central Processing Unit) will be developed in the future. The conventional sequential processing which fetches font data one character at a time and draws it is not feasible for such future processing systems. Specifically, the drawing processing would have to wait until the exclusive controller or the host CPU completes the steps of requesting the font data base for font data and fetching it, slowing down the operation for drawing a character sequence. For example, assume a system wherein raster image processing is executed on an ad-on board or raster image processing module, and a font data base is supervised by a host machine. Then, the time loss would be aggravated due to the communication between the host CPU and the ad-on board as well as other processing assigned to the host CPU.

## SUMMARY OF THE INVENTION

It is, therefore, an object of the present invention to provide a raster image processing system capable of drawing a sequence of characters at high speed.

In accordance with the present invention, a raster image processing system for forming a raster image by processing data described in a page description language has a raster image processing section for generating, on receiving the data, font data designating information for obtaining font data associated with characters which are included in the data, and forming a raster image on the basis of the font data. A font managing section accesses a data base storing font data in response to the font data designating information to thereby take in font data associated with the font data designating information. An interfacing section for interfacing the raster image processing section and the font managing section to each other by the font data designating information and font data.

Also, in accordance with the present invention, a raster image processing system has a connecting section connectable to a host which generates data described in a page description language. A raster image processing section receives data from the connecting setion, generates font data designating information for obtaining font data of characters included in the data, and forms a raster image by using the font data. A font managing section takes in font data associated with the font data designating information by accessing a data base storing font data on the basis of the font data designating information. The raster image processing section and the font managing section are interfaced to each other by the font data designating information and font data.

## BRIEF DESCRIPTION OF THE DRAWINGS

The objects and features of the present invention will become more apparent from the consideration of the following detailed description taken in conjunction with the accompanying drawings in which:

FIG. 1 is a block diagram schematically showing a raster image processing system embodying the present invention;

FIG. 2 is a block diagram schematically showing a raster image processing module included in the embodiment; and

FIGS. 3A-3E show a specific procedure for drawing a sequence of characters, taking Japanese words as an example.

## DESCRIPTION OF THE PREFERRED EMBODIMENT

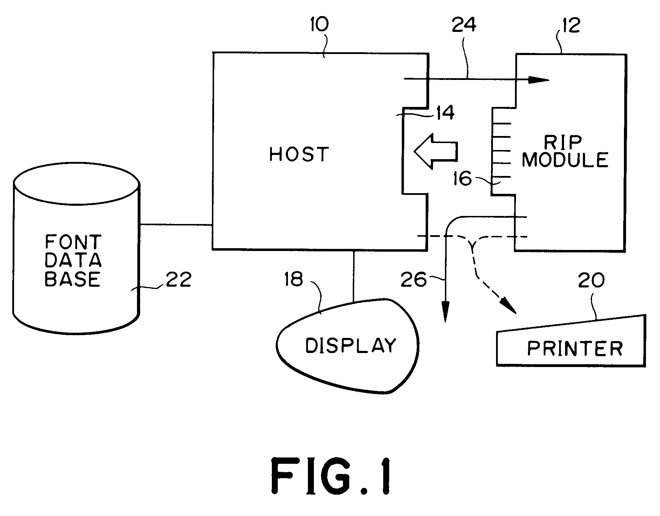

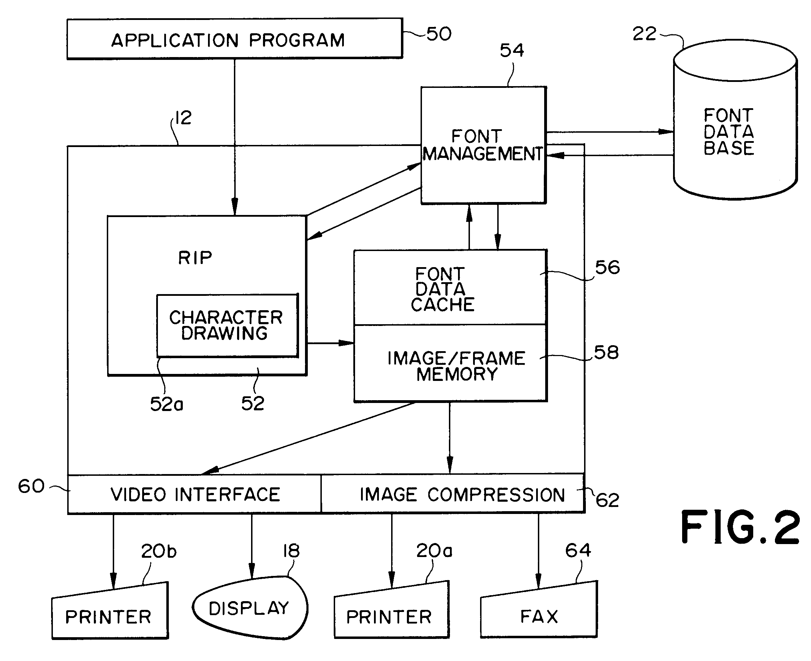

Referring to FIG. 1 of the drawings, a raster image processing system embodying the present invention is shown. As shown, the system has a host 10 which is implemented as a personal computer, work station or similar processing system, and a raster image processing (RIP) module or module package 12. The host 10 and RIP module 12 are connected to each other by connectors 14 and 16. The host 10 generates command data including text and graphic data by, for example, an application program 50 adapted for publishing, FIG. 2, and converts the command data to a command data stream described in a page description language. The illustrative embodiment is constructed as a general purpose raster image processing system.

A CRT (Cathode Ray Tube) or similar display 18 is connected to the host 10 to display text and graphic images thereon. A printer 20 is connected to the host 10 and/or the RIP module 12 and plays the role of an image output terminal which prints out text and graphic data on a recording medium. While the host 10, of course, includes a keyboard or similar input and output unit as an ordinary processing system does, such a unit will not be described herein specifically since it is not relevant to the understanding of the present invention.

The host 10 accommodates a font data base or external file 22. In the illustrative embodiment, the font data base 22 is implemented as, for example, a fixed disk, floppy disk or an IC (Integrated Circuit) board and stores font data which are to be shared by the display 18 and printer 20.

The command data stream generated by the host 10 on the basis of the application program 50 is applied to the RIP module 12. The font data stored in the font data base 22 are dynamically read thereoutof, as needed by the RIP module 12, and loaded in the module 12. The RIP module 12 effects raster image processing with the command data stream and delivers the resulting raster image data to either of the host 10 and printer 20.

FIG. 2 schematically shows a specific construction of the RIP module 12. As shown, the RIP module 12 basically has two different functions which are represented by RIP 52 and font management 54. The RIP 52 is interfaced to an application program 50 of the host 10 by a software interface. The RIP 52 generates information necessary for font data of characters described in the command data stream to be produced. Let this kind of information be referred to as font data designating information hereinafter. In the illustrative embodiment, the font data designating information includes a style of type, a character code system, a character code, and a character size which are specified by a font supplier. In the case of *kanji* (Chinese characters), for example, the style of type may be Ming type or boldface type. Regarding Japanese language, the character code system may be JIS83 (Japan Industrial Standard 1983) code or Shift JIS code system. The font data read out of the font data base 22 is loaded in a particular location in the RIP module 12, as needed. The font management 54 loads the font data in a font data cache 56 either directly in the form of font data or after enlarging or reducing them to a size matching the character size data or otherwise processing them.

The RIP 52 converts the font data loaded in the font data cache 56 to raster image data and writes the raster image data in an image/frame memory 58. The image/frame memory 58 is implemented as a storage area for temporarily storing the raster image data on, for example, a page basis. The image/frame memory 58 is interfaced to a printer 20b and the display 18 by a video interface 60. Further, the image/frame memory 58 is interfaced by image compression 62 to image output terminals of the kind which should be interfaced by a data compression system, e. g. , a printer 20a and a facsimile apparatus 64. The RIP module 12 is connected to the host 10 by a bus. This connection is implemented by a hardware bus interface.

The raster image processing system described above is operated as follows. Command data including text and graphic data are generated by the application program 50 and converted to a command data stream which is described in a page description language. The command data stream is inputted to the RIP 52 via the previously mentioned software interface. In response, the RIP 52 draws a sequence of characters contained in the command data stream by a specific procedure which will be described hereinafter.

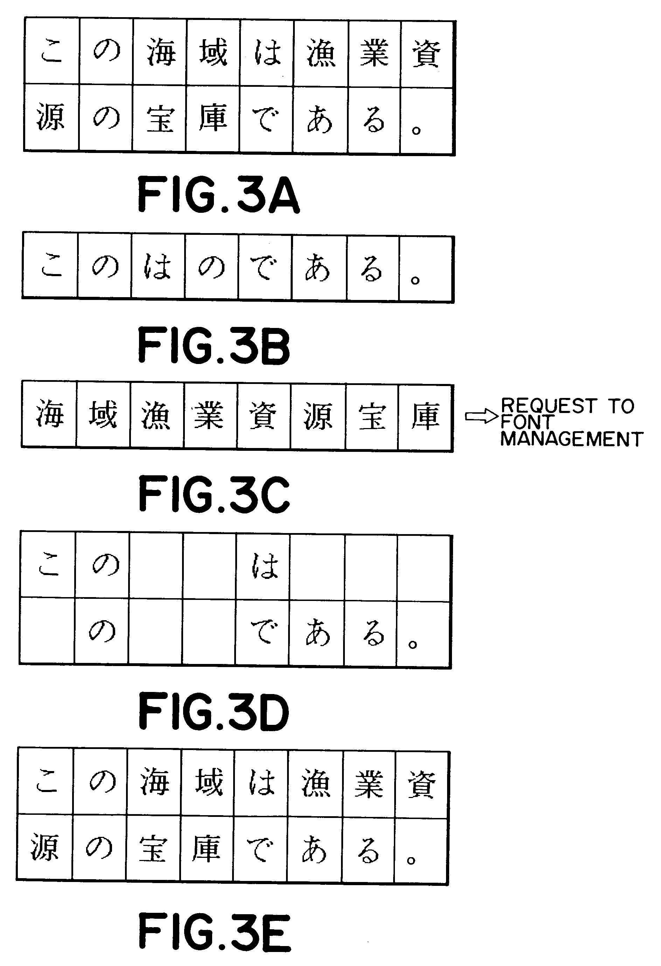

First, the RIP 52 reads a segment of the sequence of characters which has a suitable length. Then, the RIP 52 determines whether or not the characters constituting the segment exist in the font data cache 56, character by character. For the characters which do not exist in the font data cache 56, the RIP 52 generate font data designating information to obtain font data from the font data base 22 and feeds them to the font management 54. At this instant, a character drawing section 52a, FIG. 2, included in the RIP 52 immediately draws the characters which were found in the font data cache 56 without waiting for the arrival of the requested font data from the font data base 22. Therefore, the characters drawn by the character drawing section 52a at this stage of operation appear vermiculate (see FIG. 3D). Thereafter, the character drawing section 52a awaits the font data which it has requested and, on receiving them, starts drawing the remaining characters immediately. As a result, the whole segment of characters read first is drawn. In this manner, the RIP processing 52 executes part of the font data receive processing and part of the character sequence drawing processing in parallel. Such a procedure is repeated until the entire character sequence has been drawn.

FIGS. 3A-3E show an example of the above-described character drawing procedure. Assume that the font data cache 56 is loaded only with Japanese *hiragana* (cursive *kana* characters), as distinguished from *kanji*. FIG. 3A shows a segment of a character sequence which is read by the RIP 52. In the segment of FIG. 3A, the first, second and fifth characters of the first row and the second, fifth, sixth and seventh characters of the second row are *hiragana*, and the other characters are *kanji*. The character drawing section 52a separates the *hiragana* characters and the *kanji* characters, as shown in FIG. 3B and 3C. For the *kanji* characters shown in FIG. 3C, the character drawing section 52a delivers a request to the font management 54 and, just after the request, draws only the *hiragana* characters, as shown in FIG. 3D. Subsequently, the character drawing section 52a draws *kanji* data which will be sent from the font data base 22, as shown in FIG. 3E.

As stated above, the RIP 52 converts font data fed from the font management 54 to raster image data and writes the raster image data temporarily in the image/frame memory 58. As a result, image data are constructed in the image/frame memory 58 on a page basis. The raster image stored in the image/frame memory 58 is sent to the printer 20 or the display 18 via the video interface 60 or is sent to the printer 20a or the facsimile apparatus 64 or similar communication terminal after being compressed by the image compression 62. In this manner, the RIP module 12 transforms a command data stream from the application program 50 to a raster image and then outputs it to the printer 20, display 18 or similar image output terminal.

In summary, it will be seen that the present invention provides a raster image processing system which supports a great amount of font data including Japanese font data and has a processor or a controller for supervising a font data base independently of a processor which draws image. Such a system is capable of executing, in the event of drawing a character sequence, part of font data receive processing and part of character drawing processing in parallel, thereby promoting high speed drawing.

While the present invention has been described with reference to the particular illustrative embodiment, it is not to be restricted by the embodiment. It is to be appreciated that those skilled in the art can change or modify the embodiment without departing from the scope and spirit of the present invention.

**Claims**

1. A raster image processing system for forming a raster image by processing data described in a page description language,
   CHARACTERIZED BY
   raster image processing means (52) for generating, on receiving said data, font data designating information for obtaining font data associated with characters which are included in said data, and forming a raster image on the basis of said font data;
   font managing means (54) for accessing a data base storing font data in response to said font data designating information to thereby receive font data associated with said font data designating information; and
   interfacing means for interfacing said raster image processing means (52) and said font managing means (54) to each other by said font data designating information and said font data.

2. A system in accordance with claim 1,
   CHARACTERIZED BY
   data base means (22) storing said font data and, on receiving said font data designating information, outputting font data associated with said font data designating information.

3. A system in accordance with claim 1,
   CHARACTERIZED BY
   a host processor (10) for generating said data described in a page description language and transferring said data to said raster image processing means (52).

4. A system in accordance with claim 1,
   CHARACTERIZED BY
   a font data cache (56) storing predetermined font data in advance;
   said raster image processing means (52) dividing, in the event of drawing a character sequence, said character sequence into a first group of characters whose font data exist in said font data cache (56) and a second group of characters whose font data do not exist in said font data cache (56), accessing said data base for said font data of said second group of characters which do not exist in said font data cache (56) while, at the same time, reading said font data of said first group of characters out of said font data cache (56) to execute raster image processing with said first group of characters represented by said font data, and then executing raster image processing with said second group of characters by using font data sent from said data base.

5. A system in accordance with claim 4,
    CHARACTERIZED BY
    a frame memory (58) for storing at least one page of raster image having been formed by said raster image processing means (52).

6. A system in accordance with claim 4,
    CHARACTERIZED IN THAT
    said raster image processing means comprises:
    data receiving means for receiving data described in a page description language and receiving a predetermined number of characters of said data at a time;
    decision means for determining whether or not said predetermined number of characters received by said data receiving means exist in said font data cache (56) character by character;
    font data designating information generating means for generating font data designating information to access said data base for the font data of said second group of characters which do not exist in said font data cache (56); and
    raster image forming means for forming, while said image processing means (52) is accessing said data base with said font data designating information, a raster image for drawing by using font data from said font data cache (56) and, after forming said raster image, forming a raster image of the other characters by using font data from said data base.

7. A raster image processing system
    CHARACTERIZED BY
    connecting means (14, 16) connectable to a host (10) which generates data described in a page description language;
    raster image processing means (52) for receiving data from said connecting means (14, 16), generating font data designating information for obtaining font data of characters included in said data, and forming a raster image by using said font data; and
    font managing means (54) for receiving font data associated with said font data designating information by accessing a data base storing font data on the basis of said font data designating information;
    said raster image processing means (52) and said font managing means (54) being interfaced to each other by said font data designating information and said font data.

8. A system in accordance with claim 7,
    CHARACTERIZED BY
    a font data cache (56) storing predetermined font data in advance;
    said image pocessing means (52) dividing, in the event of drawing a sequence of characters, said characters into a first group of characters whose font data exist in said font data cache (56) and a second group of characters whose font data do not exist in said font data cache (56), accessing said data base for the font data of said second group of characters, reading said font data of said first group of characters out of said font data cache (56) to execute raster image processing with said first group of characters while accessing said data base, and executing raster image processing with said second group of characters by using font data from said data base on completing said raster image processing with said first group of characters.

9. A system in accordance with claim 8,
    CHARACTERIZED BY
    a frame memory (58) for storing at least one page of raster image formed by said raster image processing means (52) at a time.

10. A system in accordance with claim 9,
    CHARACTERIZED IN THAT
    said image processing means (52) comprises:
    data receiving means for receiving data described in a page description language and receiving a predetermined number of characters of said data at a time;
    decision means for determining whether or not said predetermined number of characters received by said data receiving means exist in said font data cache (56) character by character;
    font data designating information generating means for generating font data designating information to access said data base for the font data of said second group of characters which do not exist in said font data cache (56); and
    raster image forming means for forming, while said image processing means (52) is accessing said data base with said font data designating information, a raster image for drawing by using font data from said font data cache (56) and, after forming said raster image, forming a raster image of the other characters by using font data from said data base.

FIG.1

FIG.2

EP 0 494 676 A2

| こ | の | 海 | 域 | は | 漁 | 業 | 資 |
|---|---|---|---|---|---|---|---|
| 源 | の | 宝 | 庫 | で | あ | る | 。 |

## FIG.3A

| こ | の | は | の | で | あ | る | 。 |
|---|---|---|---|---|---|---|---|

## FIG.3B

| 海 | 域 | 漁 | 業 | 資 | 源 | 宝 | 庫 |
|---|---|---|---|---|---|---|---|

⇒ REQUEST TO FONT MANAGEMENT

## FIG.3C

| こ | の |  |  | は |  |  |  |
|---|---|---|---|---|---|---|---|
|  | の |  |  | で | あ | る | 。 |

## FIG.3D

| こ | の | 海 | 域 | は | 漁 | 業 | 資 |
|---|---|---|---|---|---|---|---|
| 源 | の | 宝 | 庫 | で | あ | る | 。 |

## FIG.3E